# EUROPÄISCHE PATENTANMELDUNG

(11) **EP 0 754 694 A1**
(43) Veröffentlichungstag der Anmeldung: **22.01.1997**
(21) Anmeldenummer: 96111155.6
(22) Anmeldetag: 11.07.1996
(51) Int. Cl.: C07F 9/50

(54) **Verfahren zur Herstellung sekundärer Arylphosphane**

(30) Priorität: 17.07.1995 DE 19526047
(71) Anmelder: HOECHST AKTIENGESELLSCHAFT, 65929 Frankfurt am Main (DE)
(72) Erfinder: Kleiner, Hans-Jerg, Dr., 61476 Kronberg (DE)

(57) **Zusammenfassung**

Die Erfindung betrifft ein Verfahren zur Herstellung von sekundären Phosphanen der allgemeinen Formel (I) 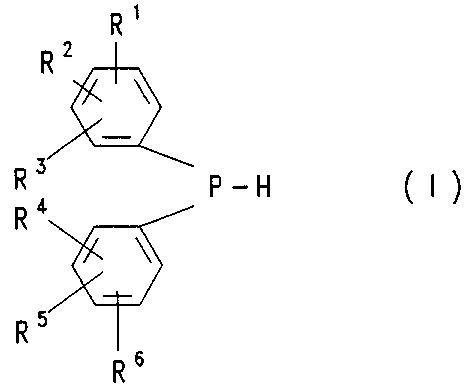 worin R¹ bis R⁶ unabhängig voneinander Wasserstoff, Halogen, (C₁-C₆)Alkyl oder (C₁-C₆)Alkoxy bedeuten, dadurch gekennzeichnet, daß man sekundäre Phosphanoxide der allgemeinen Formel (II) 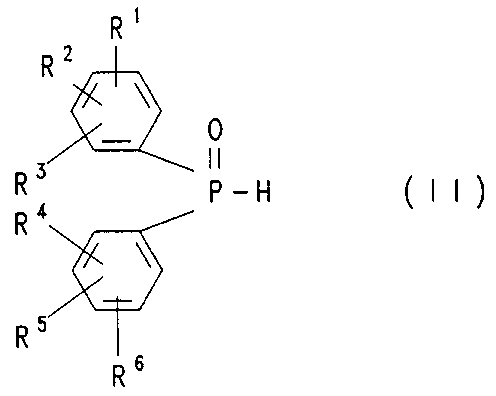 mit Lewissäuren als Katalysatoren bei erhöhter Temperatur umsetzt und die gebildeten sekundären Phosphane der allgemeinen Formel (I) unter vermindertem Druck abdestilliert.

## Beschreibung

Die Erfindung betrifft ein Verfahren zur Herstellung sekundärer Arylphosphane.

Sekundäre Arylphosphane, wie z.B. Diphenylphosphan, sind bedeutende Zwischenprodukte zur Herstellung von Phosphor enthaltenden Liganden für zahlreiche technisch bedeutsame Katalysatoren (siehe z.B. US-PS 3657298). Ihre Herstellung erfolgt häufig durch Reduktion geeigneter dreiwertiger Ausgangsverbindungen wie z.B. von Chlordiphenylphosphan mit Lithiumaluminiumhydrid (Houben-Weyl, Methoden der org. Chemie, Band XII/1, Seite 60, Georg Thieme Verlag, 1963); häufig erfolgt auch eine Reduktion fünfwertiger Phosphorverbindungen mit Silanen mit Si-H-Bindung (H. Fritzsche et al., Chem. Ber. 97, 1988 (1964); DE-OS 1223838). Diese Verfahren sind technisch aufwendig und schwierig durchzuführen. Insbesondere ist mit dem Anfall unerwünschter Nebenprodukte sowie mit starken Geruchsbelästigungen zu rechnen.

Bekannt ist weiterhin die thermische Disproportionierung von sekundären Phosphanoxiden zu den entsprechenden sekundären Phosphanen und Phosphinsäuren:

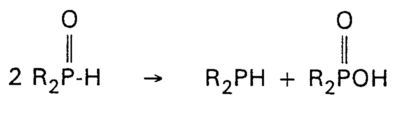

Nach der SU-PS 1325056 (1987) kann Diphenylphosphanoxid bei 165 bis 175°C in Gegenwart von 5 bis 10 Mol-% von Diphenylphosphinsäure in Diphenylphosphan und Diphenylphosphinsäure gespalten werden. Nachteilig bei diesem technisch interessanten Verfahren ist jedoch, daß das hergestellte Diphenylphosphan 15 bis 20 % des Ausgangsstoffes Diphenylphosphanoxid enthält. Dadurch ist eine schwierige und technisch nicht einfache Trennung der Komponenten erforderlich.

Es bestand also ein Bedarf nach einem Verfahren, das sekundäre Arylphosphane technisch einfach und in hoher Ausbeute und Reinheit zugänglich macht.

Diese Aufgabe wird gelöst durch ein Verfahren zur Herstellung von sekundären Phosphanen der allgemeinen Formel (I) 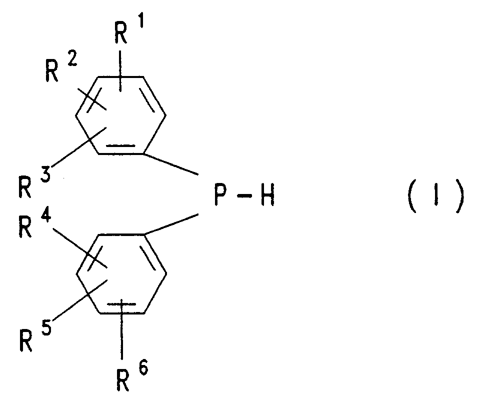 worin R¹ bis R⁶ unabhängig voneinander Wasserstoff, Halogen, (C₁-C₆)Alkyl oder (C₁-C₆)Alkoxy bedeuten, dadurch gekennzeichnet, daß man sekundäre Phosphanoxide der allgemeinen Formel (II) 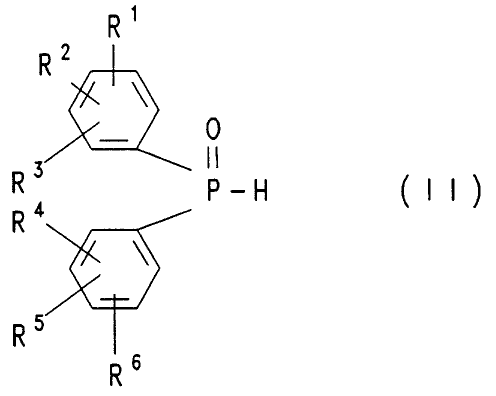 mit Lewissäuren als Katalysatoren bei erhöhter Temperatur umsetzt und die gebildeten sekundären Phosphane der allgemeinen Formel (I) unter vermindertem Druck abdestilliert.

Von Interesse ist das Verfahren zur Herstellung von Verbindungen der Formel (I), worin R¹ bis R⁶ Wasserstoff, Fluor, Chlor, (C₁-C₄)Alkyl oder (C₁-C₄)Alkoxy bedeuten.

Wichtig sind hierbei die Verbindungen worin 2, insbesondere 2 bevorzugt 4 der Reste R¹ bis R⁶ Wasserstoff bedeuten.

Beispiele für Alkyl bzw. Alkoxy in den Resten R¹ bis R⁶ in den Verbindungen (I)/(II) sind Methyl, Ethyl, Propyl, Isopropyl und die verschiedenen Butylreste bzw. Methoxy und Ethoxy.

Von Bedeutung ist das Verfahren zur Herstellung von Diphenylphosphan, Di-p-tolylphosphan, 2-Chlorphenyl-phenylphosphan, Bis-4-fluorphenylphosphan, Bis-2-methoxyphenylphosphan.

Als Lewissäurekatalysatoren eignen sich Halogenide der Gruppe IIb und IIIa des Periodensystems, wobei Aluminiumchlorid, Zinkchlorid und Indiumchlorid gute Resultate liefern. Die Menge an Katalysator beträgt zweckmäßigerweise 0,05 bis 2 Gew.-%, vorzugsweise 0,1 bis 0,5 Gew.-%, bezogen auf die eingesetzte Verbindung (II).

Die Ausgangsverbindungen der Formel (II) werden zusammen mit dem Katalysator auf 140 bis 250°C, vorzugsweise 150 bis 200°C erhitzt. Bei dem durch den Katalysator bedingten Zersetzungspunkt der Reaktionsmischung beginnt die Abdestillation der sekundären Phosphane der Formel (I) unter vermindertem Druck. Wenn der Hauptteil des Phosphans abdestilliert ist, wird die Innentemperatur weiter erhöht, bis kein Phosphan mehr abdestilliert.

Die nach dem Verfahren vorliegender Erfindung hergestellten Phosphane sind überraschenderweise sehr rein und praktisch frei von den Ausgangsstoffen der Formel (II). Eine weitere Feinreinigung ist in der Regel nicht erforderlich.

Die nachfolgenden Beispiele dienen zur Erläuterung der Erfindung.

### Beispiel 1

101 g (0,5 Mol) Diphenylphosphanoxid und 0,5 g Aluminiumchlorid werden vermischt und auf 157°C erhitzt unter gleichzeitig vermindertem Druck (12 mbar). Über einen absteigenden Kühler destilliert Diphenylphosphan bei 144°C Übergangstemperatur ab. Zum Schluß wird die Innentemperatur bis 183°C gesteigert. Man erhält 42 g Diphenylphosphan mit einer 99 %igen Reinheit laut 31-P-NMR. Das entspricht einer Ausbeute von 90 % d.Th..

### Beispiel 2

101 g (0,5 Mol) Diphenylphosphanoxid und 0,4 g Zinkchlorid werden vermischt und auf 164°C erhitzt unter gleichzeitig vermindertem Druck (14 mbar). Über einen absteigenden Kühler destilliert Diphenylphosphan bei 148°C Übergangstemperatur ab. Zum Schluß wird die Innentemperatur bis 183°C gesteigert. Man erhält 41 g Diphenylphosphan. Das entspricht einer Ausbeute von 88 % d.Th..

### Beispiel 3

172 g (0,852 Mol) Diphenylphosphanoxid und 0,8 g Indiumchlorid werden vermischt und auf 152°C erhitzt unter gleichzeitig vermindertem Druck (8 mbar). Über einen absteigenden Kühler destilliert Diphenylphosphan bei 132°C Übergangstemperatur ab. Nach insgesamt 2 Stunden ist die Innentemperatur auf 195°C erhöht worden. Man erhält 70 g Diphenylphosphan. Das entspricht einer Ausbeute von 88 % d Th..

## Patentansprüche

1. Verfahren zur Herstellung von sekundären Phosphanen der allgemeinen Formel (I) 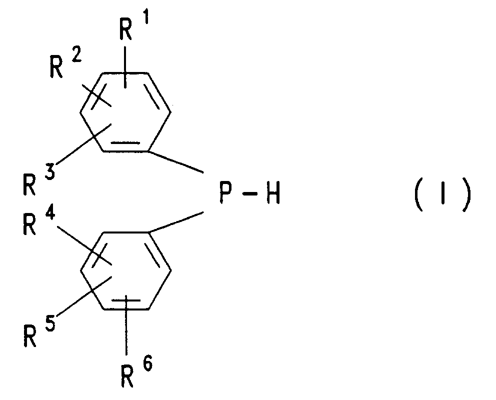 worin R¹ bis R⁶ unabhängig voneinander Wasserstoff, Halogen, (C₁-C₆)Alkyl oder (C₁-C₆)Alkoxy bedeuten, dadurch gekennzeichnet, daß man sekundäre Phosphanoxide der allgemeinen Formel (II) 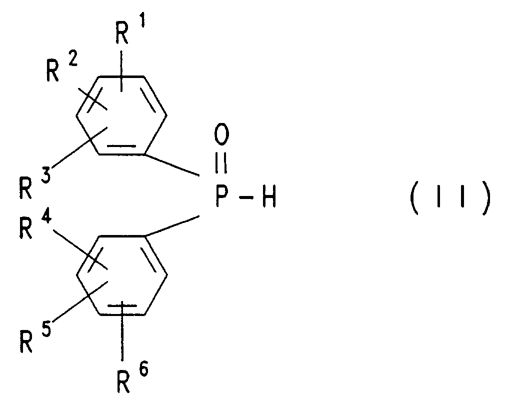 mit Lewissäuren als Katalysatoren bei erhöhter Temperatur umsetzt und die gebildeten sekundären Phosphane der allgemeinen Formel (I) unter vermindertem Druck abdestilliert.

2. Verfahren nach Anspruch 1, dadurch gekennzeichnet, daß R¹ bis R⁶ Wasserstoff, Fluor, Chlor, (C₁-C₄)Alkyl oder (C₁-C₄)Alkoxy bedeuten.

3. Verfahren nach Anspruch 1 oder 2, dadurch gekennzeichnet, daß zwei, insbesondere 3, bevorzugt 4 der Reste R¹ bis R⁶ Wasserstoff bedeuten.

4. Verfahren nach Anspruch 1, dadurch gekennzeichnet, daß Formel (I) für Diphenylphosphan, Di-p-tolylphosphan, 2-Chlorphenylphenylphosphan, Bis-4-fluorphenylphosphan oder Bis-2-methoxyphenylphosphan steht.

5. Verfahren nach mindestens einem der Ansprüche 1 bis 4, dadurch gekennzeichnet, daß als Lewissäurekatalysatoren Halogenide der Gruppe IIb und IIIa des Periodensystems, insbesondere Aluminiumchlorid, Zinkchlorid oder Indiumchlorid eingesetzt werden.

6. Verfahren nach mindestens einem der Ansprüche 1 bis 5, dadurch gekennzeichnet, daß 0,05 bis 2 Gew.-%, insbesondere 0,1 bis 0,5 Gew.-% Katalysator bezogen auf Verbindung der Formel (II) eingesetzt werden.

7. Verfahren nach mindestens einem der Ansprüche 1 bis 6, dadurch gekennzeichnet, daß die Reaktionstemperatur 140 bis 250°C, insbesondere 150 bis 200°C beträgt.
